Europäisches Patentamt

**European Patent Office**

Office européen des brevets

(19)

(11) **EP 1 307 642 B1**

(12) **EUROPÄISCHE PATENTSCHRIFT**

(45) Veröffentlichungstag und Bekanntmachung des Hinweises auf die Patenterteilung:
**19.05.2004 Patentblatt 2004/21**

(51) Int Cl.⁷: **F02D 15/02**, F16H 21/20, F02B 75/04

(21) Anmeldenummer: **01982204.8**

(22) Anmeldetag: **08.08.2001**

(86) Internationale Anmeldenummer:
**PCT/EP2001/009166**

(87) Internationale Veröffentlichungsnummer:
**WO 2002/012694 (14.02.2002 Gazette 2002/07)**

(54) **HUBKOLBEN-BRENNKRAFTMASCHINE MIT VARIABLEM VERDICHTUNGSVERHÄLTNIS**

INTERNAL COMBUSTION PISTON ENGINE COMPRISING VARIOUS COMPRESSION INFLUENCES

MOTEUR A COMBUSTION INTERNE A PISTON ALTERNATIF, A TAUX DE COMPRESSION VARIABLE

(84) Benannte Vertragsstaaten:
**DE FR GB IT SE**

(30) Priorität: **08.08.2000 RU 2000120771**

(43) Veröffentlichungstag der Anmeldung:
**07.05.2003 Patentblatt 2003/19**

(73) Patentinhaber:
- **DaimlerChrysler AG**
  **70567 Stuttgart (DE)**
- **NAMI - State Federal Centre of Automotive Industry**
  **125438 Moskau (RU)**

(72) Erfinder:
- **DACHTCHENKO, Oleg**
  **70599 Stuttgart-Plieningen (DE)**
- **GELSE, Willi**
  **73614 Schorndorf (DE)**
- **KUTENEV, Vadim**
  **Moskau, 127434 (RU)**
- **MAGG, Klaus**
  **70619 Stuttgart (DE)**
- **NIKITIN, Andrej**
  **Moskau, 127550 (RU)**
- **RAU, Erhard**
  **73235 Weilheim (DE)**
- **ROMANCHEV, Yuri**
  **Moskau, 107065 (RU)**
- **SCHNÜPKE, Hubert**
  **70619 Stuttgart (DE)**
- **TER-MKRETIEHIAN, George**
  **Moskau, 125008 (RU)**
- **ZLENKO, Michail**
  **Moskau (RU)**

(56) Entgegenhaltungen:
EP-A- 1 143 127                DE-U- 29 913 107
FR-A- 2 802 973                US-A- 4 517 931
US-A- 5 595 146

- **PATENT ABSTRACTS OF JAPAN vol. 1998, no. 01, 30. Januar 1998 (1998-01-30) -& JP 09 228858 A (HONDOU JUTAKU:KK), 2. September 1997 (1997-09-02)**

**Beschreibung**

Die Erfindung gehört zum Bereich Maschinenbau, insbesondere zu Brennkraftmaschinen und bezieht sich auf eine Hubkolben-Brennkraftmaschine nach dem Oberbegriff des Anspruches 1.

Aus der Druckschrift [1] ist eine derartige Hubkolben-Brennkraftmaschine mit automatischer Variierung der Verdichtung durch Änderung der Kolbenhöhe bekannt, deren Kolben aus zwei Teilen mit hydraulischen Kammern dazwischen besteht (KAVV). Die Variierung der Verdichtung erfolgt automatisch durch die Änderung der Position eines Teils des Kolbens gegenüber dem anderen Teil mittels des Flußigkeitsüberflußes von einer Kammer in die andere.

Zu den Nachteilen dieses vorbekannten Prototypen gehört die Tatsache, daß sich das System der Variierung der Verdichtung in einem Hochtemperaturbereich (im Zylinder) befindet. Die Erfahrung zeigt, daß das beschriebene System bei Wechsel der Fahrweise, bei Beschleunigungen z. B. zum Klopfen neigt, da die Steuerung der Hydraulik eine schnelle und für alle Zylinder gleichzeitige Variierung der Verdichtung nicht zuläßt.

Die Intention, den Mechanismus der. Variierung aus dem Hochtemperaurbereich herauszunehmen, hat zu einer Reihe anderer technischer Lösungen geführt, die eine Änderung der Kinematik der Brennkraftmaschine vorsehen, nämlich Zusatzelemente der kinematischen Kette und deren Beeinflussung eine Variierung der Verdichtung ermöglicht.

Es ist auch eine Brennkraftmaschine vom Typ Jante [2] (Bild 1) bekannt, die zwei zusätzliche Elemente (Zusatzpleuel 3 und Kipphebel 4) zwischen der Kurbel 6 und dem Pleuel 2 beinhaltet. Der Kipphebel 4 führt eine schwankende Bewegung ausgehend vom Anlenkpunkt Z aus. Aufgrund der Änderung der Grundposition des Lagerpunktes A bei Verstellung des Nockens 1, der am Gehäuse der Brennkraftmaschine befestigt ist, erfolgt eine Variierung des Verdichtungsverhältnisses. Der Nocken 1 dreht sich in Abhängigkeit von der Motorbelastung, dabei bewegt sich der Anlenkpunkt Z auf einer Kreisbahn.

Aus der Druckschrift [3] ist auch eine Brennkraftmaschine vom Typ FEV (Bild 2) bekannt, die ein Zusatzpleuel 3 zwischen der Kurbel 1 und dem Pleuel 2 beinhaltet. Das Pleuel 2 ist zusätzlich mit dem Kipphebel 4 verbunden, der eine schwankende Bewegung ausgehend vom Anlenkpunkt Z ausführt. Aufgrund der Änderung der Grundposition dieses Anlenkpunktes Z bei Verstellung des Nockens 6, der am Gehäuse der Brennkraftmaschine befestigt ist, erfolgt eine Variierung des Verdichtungsverhältnisses. Der Nocken 6 dreht sich in Abhängigkeit von der Motorbelastung, dabei bewegt sich der Anlenkpunkt Z auf einer Kreisbahn.

Aus der Druckschrift N DE4312954 Al ist eine Brennkraftmaschine vom Typ IFA [4] (Bild 3) bekannt, die ein Zusatzpleuel 3 zwischen der Kurbel 1 und dem Pleuel 2 beinhaltet. Das Pleuel 2 ist zusätzlich mit einem Ende des Kipphebels 4 verbunden, dessen anderes Ende eine schwankende Bewegung ausgehend vom Anlenkpunkt Z ausführt. Aufgrund der Änderung der Grundposition des Anlenkpunktes Z bei Verstellung des Nockens 6, der am Gehäuse der Brennkraftmaschine befestigt ist, erfolgt eine Variierung des Verdichtungsverhältnisses. Der Nocken 6 dreht sich in Abhängigkeit von der Motorbelastung, dabei bewegt sich der Anlenkpunkt Z auf einer Kreisbahn.

Dokument US-A-4 517 931 offenbart eine Hubkolben-Brennkraftmaschine gemäß dem Oberbegriff des Anspruchs 1.

Zu den Nachteilen der beschriebenen Motoren [2-4] gehören in erster Linie schlechte Laufruhe, die durch die großen Oszillationskräfte zweiter Ordnung von den translatorisch bewegbaren Massen bedingt ist, welche an der Kinematik der Mechanismen liegt und eine Vergrößerung der Gesamtbreite oder Gesamthöhe des Aggregats zur Folge hat. Dies macht die Anwendung dieser Brennkraftmaschinen im Transportbereich unmöglich.

Ein variables Verdichtungsverhältnis in einer Hubkolben-Brennkraftmaschine ermöglicht es, folgende Ziele zu erreichen:

- Erhöhung des mittleren Drucks Pe durch die Erhöhung des Ladedrucks ohne Steigung des maximalen Verbrennungsdrucks mittels Verringerung der Verdichtung bei Steigung der Motorbelastung;

- Verringerung des Kraftstoffverbrauchs bei niedrigen und mittleren Belastungen durch die Erhöhung der Verdichtung bei Senkung der Motorbelastung;

- Verbesserung der Laufruhe des Motors.

Je nach Typ der Brennkraftmaschine ergeben sich durch das variable Verdichtungsverhältnis folgende Vorteile (für Brennkraftmaschinen nach dem Otto-Prinzip):

- Bei Beibehaltung der erreichten Sparsamkeit des Motors bei niedrigen und mittleren Belastungen wird eine weitere Steigung der Motorleistung durch die Erhöhung des Ladedrucks bei Verringerung der Verdichtung erreicht (Bild 4 a).

- Bei Beibehaltung des erreichten nominalen Leistungsniveau des Motors, bei niedrigen und mittleren Belastungen wird eine Verbesserung des Kraftstoffverbrauchs durch die Erhöhung der Verdichtung bis zum zulässigen Klopfniveau erreicht (Bild 4b).

Bei Beibehaltung der erreichten nominalen Leistungsniveau des Motors wird die Sparsamkeit bei niedrigen und mittleren Belastungen verbessert und die Reduzierung des Geräuschniveaus bei gleichzeitiger Reduzierung der nominalen Drehzahl (Bild 4c) erreicht.

Für Brennkraftmaschinen nach dem Diesel-Prinzip kann sich die Variierung der Verdichtung in drei gleichberechtigten Richtungen entwickeln:

- Bei konstantem Hubraum und nominaler Drehzahl wird die Motorleistung durch die Erhöhung des Ladedrucks erhöht. In diesem Fall wird nicht die Sparsamkeit, sondern die Leistung des Fahrzeugs verbessert (Bild 5a).

- Bei konstantem Hubraum und nominaler Leistung wird der mittlere Druck Pe bei Senkung der nominalen Drehzahl erhöht (Bild 5b). In diesem Fall wird bei Beibehaltung des Leistung des Fahrzeugs die Sparsamkeit des Motors durch die Erhöhung des mechanischen Wirkungsgrads verbessert (Bild 5b).

- Ersetzung eines bestehenden Motors mit großem Hubraum durch einen Motor mit kleinerem Hubraum mit gleicher Leistung. In diesem Fall wird die Sparsamkeit des Motors bei mittleren und vollen Belastungen verbessert, die Masse und die Außenabmessungen des Motors verringert.

Der Erfindung liegt das Problem zu Grunde, die Kinematik einer Hubkolben-Brennkraftmaschine in der Weise auszubilden, dass mit geringem konstruktiven Aufwand, bei reduzierten Lagerkräften und Massenkräften zweiter Ordnung ein variables Verdichtungsverhältnis einstellbar ist.

Dieses Problem wird erfindungsgemäß mit den kennzeichnenden Merkmalen des Anspruches 1 gelöst.

Die neuartige Hubkolben-Brennkraftmaschine 1 beinhaltet (Bild 6) das Gehäuse 2 mit dem Zylinder 3 und dem Kolben 4 in diesem Zylinder, das Pleuel 6, das über ein Gelenk mit dem Kolben 4 verbunden ist, die Kurbel 8 im Gehäuse 2, das Anlenkpleuel 10, das mit einem Ende über ein Gelenk mit dem Gehäuse 2 verbunden ist und den dreieckigen Querhebel 7, dessen erstes Ende mit dem anderen Ende des Pleuels 6, das zweite Ende mit der Kurbel 8 und das dritte End mit dem Anlenkpleuel 10 über Gelenke verbunden sind, beinhaltet. Um ein variables Verdichtungsverhältnis zu ermöglichen, ist die Schwingachse Z des Anlenkpleuels 6 auf einer Steuerbahn, z. B. auf einem Nocken oder einer Zusatzkurbel 11 bewegbar.

Abhängig von der Lage der Schwingachse Z des Steuerhebels hat die neuartige Hubkolben-Brennkraftmaschine zwei grundsätzliche Auslegungen (Bild 6) :

- Auslegung 1 (Bild 6a), bei der die waagrechte Fläche der Schwingachse Z des Anlenkpleuels 10 befindet sich über dem Verbindungspunkt der Kurbel 8 und des Querhebels 7 bei oberem Totpunkt der Kurbel, oder, mit anderen Worten, das Anlenkpleuel 10 und das Pleuel 6 sich auf derselben Seite des Querhebels befinden;

- Auslegung 2 (Bild 6b), bei der die waagrechte Fläche der Schwingachse Z des Anlenkpleuels 10 befindet sich unter dem Verbindungspunkt der Kurbel 8 und des Querhebels 7 bei oberem Totpunkt der Kurbel, oder, mit anderen Worten, das Anlenkpleuel 10 und das Pleuel 6 sich auf der gegenüberliegenden Seite des Querhebels befinden;

Über den Anlenkpunkt Z kann das Kompressionsverhältnis über eine einfache Steuerbewegung über die Zusatzkurbel bzw. den Verstellnocken verstellt werden. Zusätzlich kann der Anlenkpunkt Z eine kontinuirliche zyklische Bewegung ausführen, welche mit der Drehbewegung der Kurbelwelle synchronisiert ist.

Wie dem Bild 7 zu entnehmen ist, weist die neuartige Hubkolben-Brennkraftmaschine nach dem Anspruch 1 erhebliche Vorteile gegenüber den beschriebenen Systemen [2-4] und dem herkömmlichen Kurbeltrieb auf, insbesondere in Bezug auf Laufruhe der Brennkraftmaschine.

Diese Vorteile können nur unter Einhaltung bestimmter geometrischer Bedingungen erreicht werden, nämlich bei richtiger Auswahl der Längen einzelner Elemente und ihrer Position gegenüber der Achse der Kurbelwelle.

Die Quintessenz der Erfindung besteht in der Bestimmug der Maße einzelner Elemente (in Relation zum Kurbelradius) und der Koordinaten einzelner Gelenke des Kraftübertragungsmechanismus, die durch Optimierung dieses Mechanismus mittels kinematischer und dynamischer Analyse gemacht werden können. Die Optimierung des mit 9 Parametern definierten Mechanismus (Bild 8) hat zum Ziel die Erreichung der geringsten Kräfte (Belastungen) auf einzelne Glieder des Mechanismus und der besten Laufruhe.

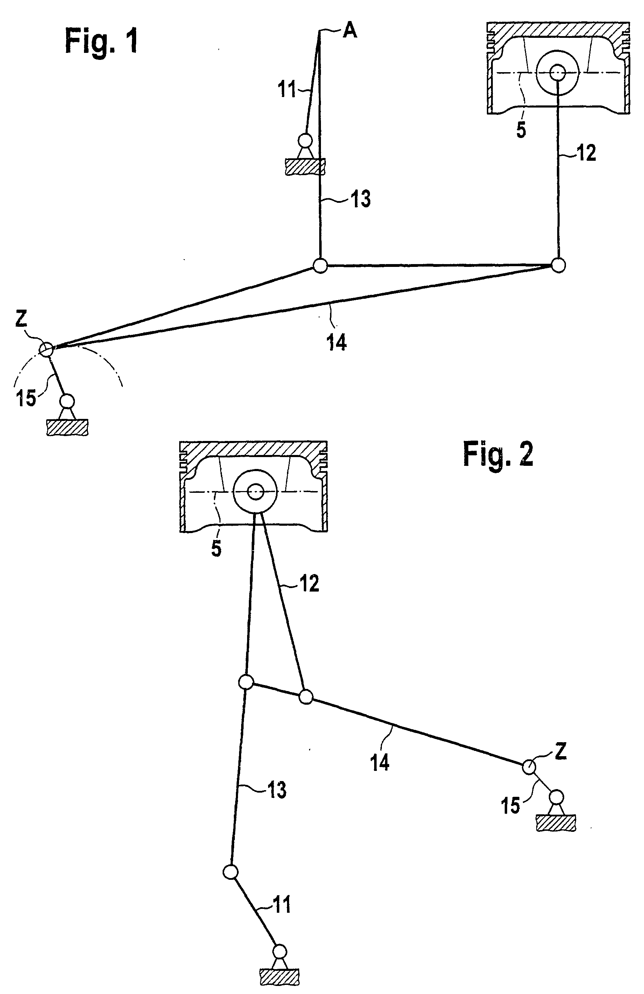

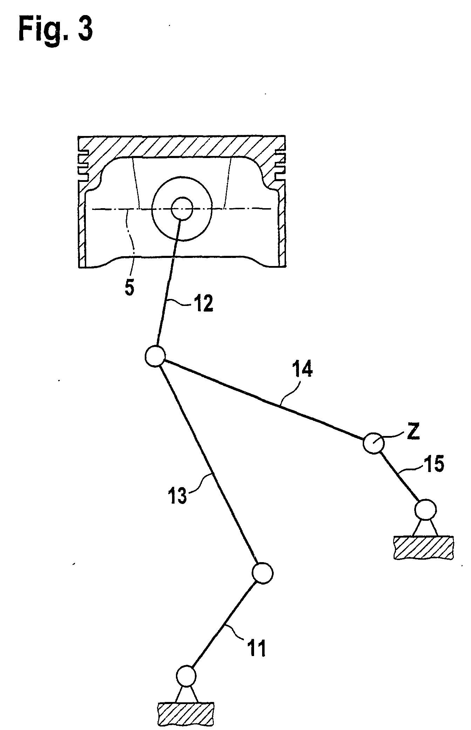

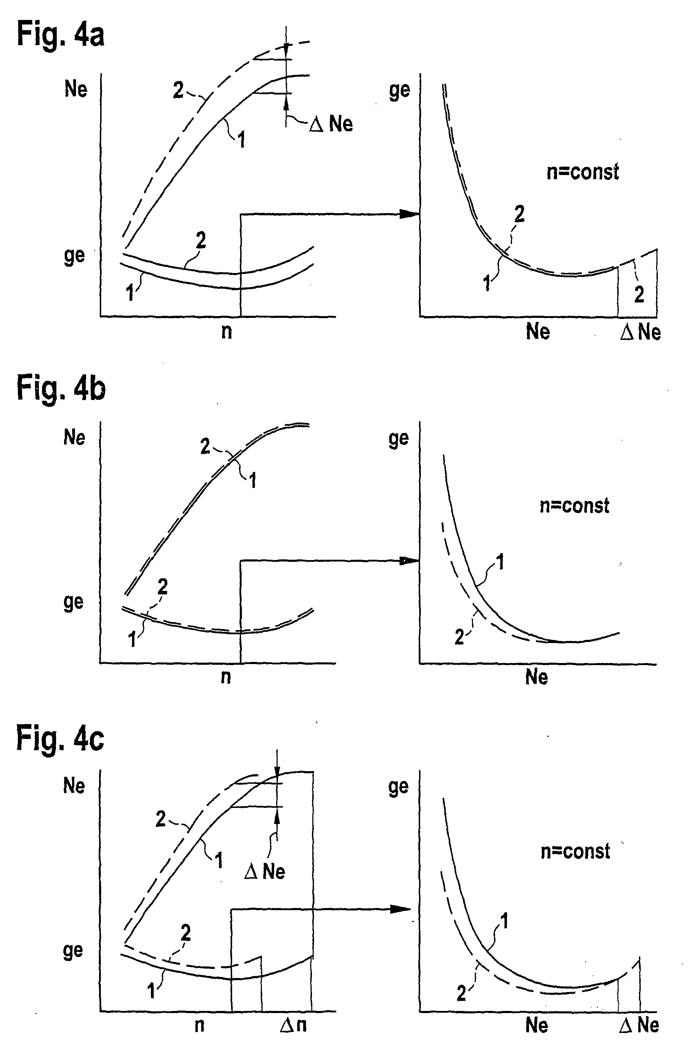

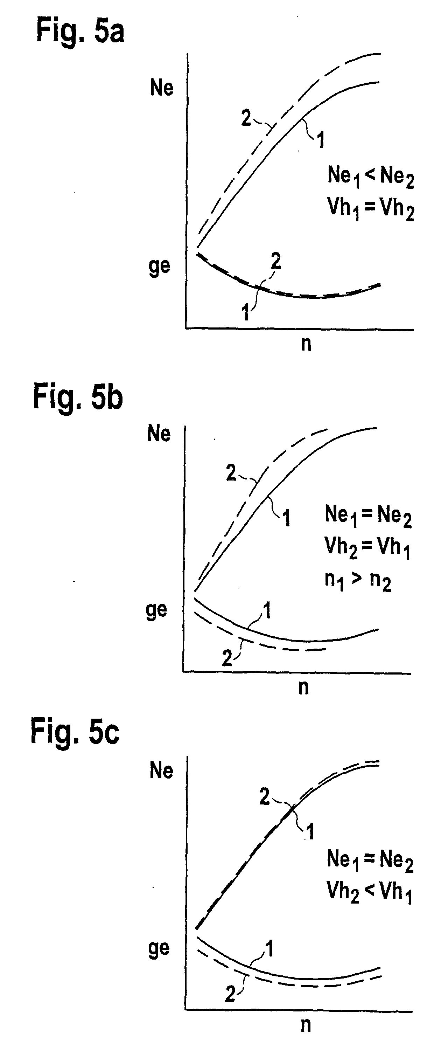

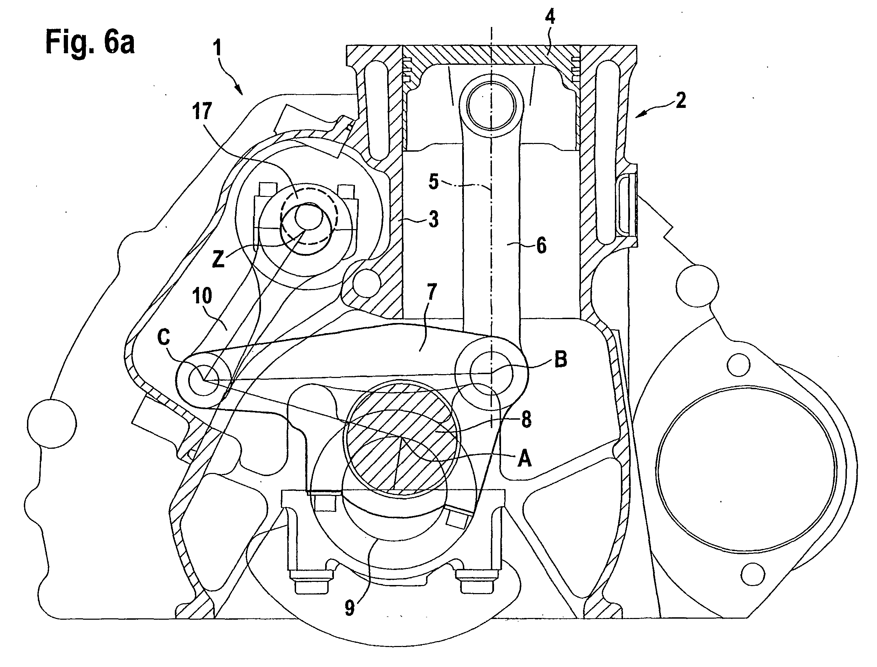

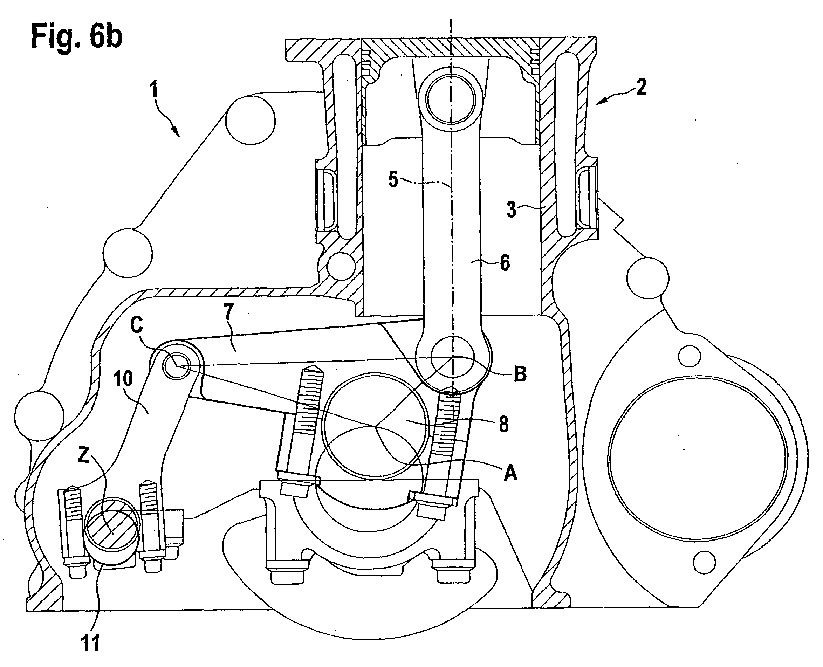

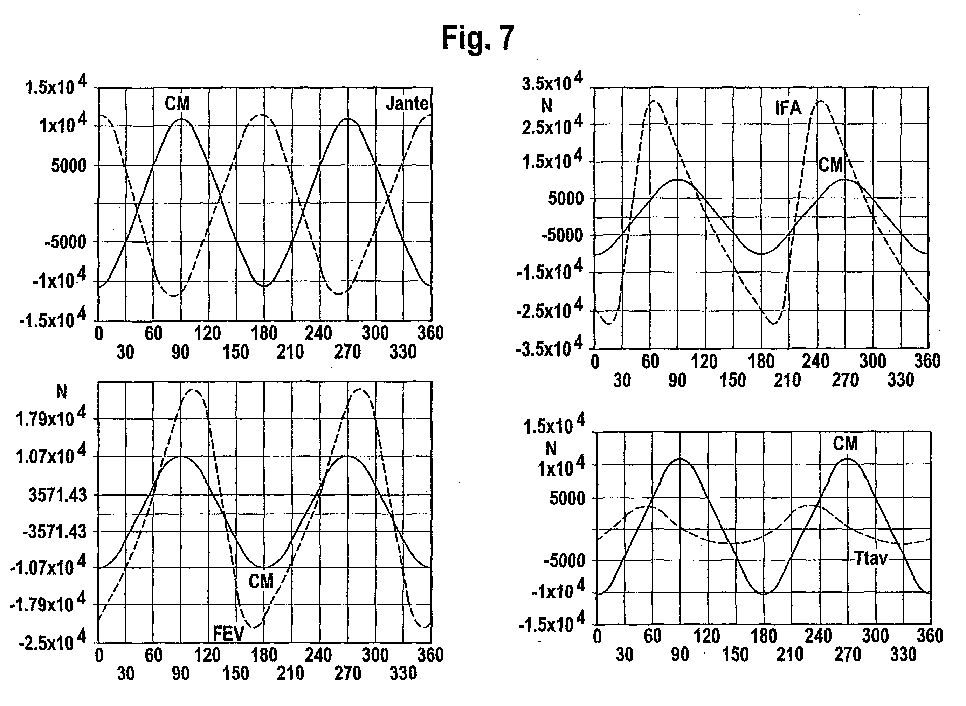

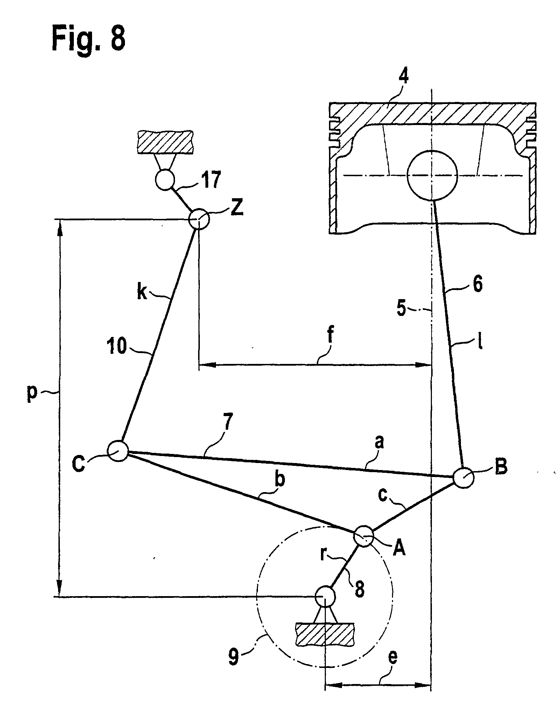

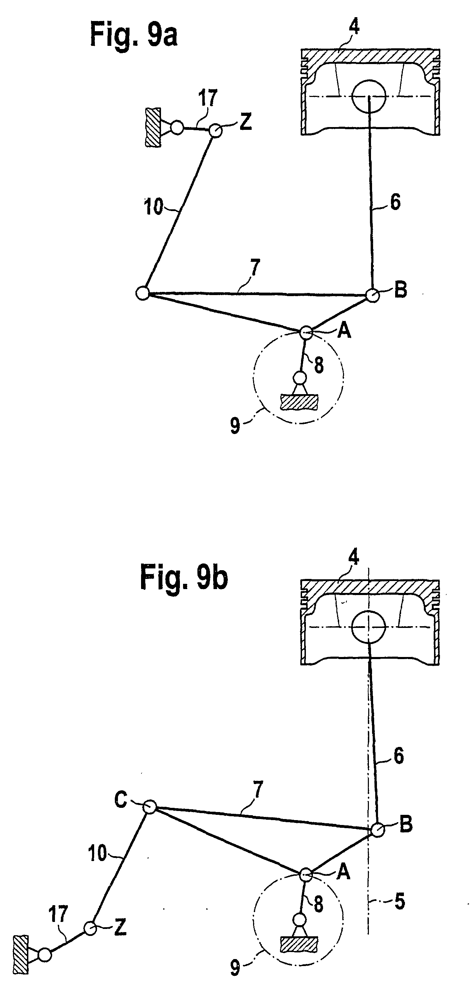

Anhand der Fig. 9, die eine stilisierte Darstellung von Fig. 1 ist, soll die Funktionsweise des einstellbaren Kurbeltriebs erläutert werden. Im Betrieb der Brennkraftmaschine wird der Kolben 4 translatorisch auf und ab bewegt, wobei diese Bewegung auf das Pleuel 6 übertragen wird. Die Pleuelbewegung wird über den Lagerpunkt B auf den Querhebel 7 übertragen, dessen Bewegungsfreiheit durch die Koppelung mit dem Steuerhebel 10 im Lagerpunkt C eingeschränkt ist. Falls der Anlenkpunkt Z des Steuerhebels 10 fixiert ist, kann der Lagerpunkt C des Querhebels 7 auf einer Kreisbahn bewegt werden, dessen Radius der Länge des Steuerhebels 10 entspricht. Die Position der Kreisbahn des Lagerpunktes C in Bezug auf das Motorgehäuse der Hubkolben-Brennkraftmaschine wird durch die Position des Anlenkpunktes Z bestimmt. Bei einer Lageänderung des Anlenkpunktes Z ändert sich die Lage der Kreisbahn, auf der der Lagerpunkt C bewegbar ist, wodurch die Bewegungsbahnen der anderen kinematischen Größen beeinflusst werden können, insbesondere die Koordinate des oberen Totpunkts des Kolbens 4. Der Anlenkpunkt Z ist vorteilhaft auf einer Kreisbahn bewegbar. Der Anlenkpunkt Z kann auch während des Betriebs der Brennkraftmaschine auf der vorgegebenen Steuerbahn bewegt werden; darüber hinaus ist aber auch eine Verriegelung der Position des Anlenkpunktes Z in beliebigen Lagen auf der Steuerbahn möglich.

Der Querhebel 7 erfährt eine weitere Bindung über sein Gelenk A zur Kurbel 8 der Kurbelwelle 9. Das Gelenk A läuft auf einer Kreisbahn um, deren Radius durch die Kurbellänge der Kurbel 8 bestimmt wird. Das Gelenk A befindet sich - bezogen auf die Verbindungslinie zwischen den Lagerpunkten B und C des Querhebels 7 - in einem zwischenliegenden Bereich. Auf Grund der kinematischen Bindung des Lagerpunktes C über den Steuerhebel 10 ist die translatorische Bewegung in Richtung der Längsachse 5 von Kolben 4 beeinflussbar. Die Bewegung des Lagerpunktes B entlang der Längsachse 5 wird durch die Bewegungsbahn des Lagerpunktes C des Querhebels 7 bestimmt. Die Beeinflussung der Bewegung des Lagerpunktes B ermöglicht die Steuerung der Hub-Bewegung des Kolbens 4 über das Pleuel 6, so dass die Koordinate des Kolbens 4 im oberen Totpunkt beeinflussbar ist.

Im Ausführungsbeispiel nach der Fig. 9a befinden sich das Pleuel 6 und der Steuerhebel 10 beide auf der gleichen Seite des Querhebels 7.

Eine Verschwenkung des als Zusatzkurbel 11 ausgebildeten Stellelements aus der in Fig. 9a gezeigten etwa horizontalen Lage in eine beispielsweise vertikale Lage nach unten hat zur Folge, dass die Koordinate des Kolbens 4 im oberen Totpunkt weiter nach oben verschoben wird, so dass sich ein höheres Kompressionsverhältnis ergibt.

Fig. 9b zeigt eine weitere Darstellung der Brennkraftmaschine, jedoch mit dem Unterschied, dass der Steuerhebel 10 und das als Zusatzkurbel 11 bzw. Verstellnocken ausgebildete Stellelement in Bezug auf den Querhebel 7 auf der dem Pleuel 6 gegenüberliegenden Seite angeordnet sind. Die Funktionsweise des Kurbeltriebs entspricht aber im Übrigen der Funktionsweise des Kurbeltriebs aus der Fig. 9a, bei dem der Steuerhebel und das Stellelement in Bezug auf den Querhebel 7 auf der gleichen Seite wie das Pleuel 6 angeordnet sind.

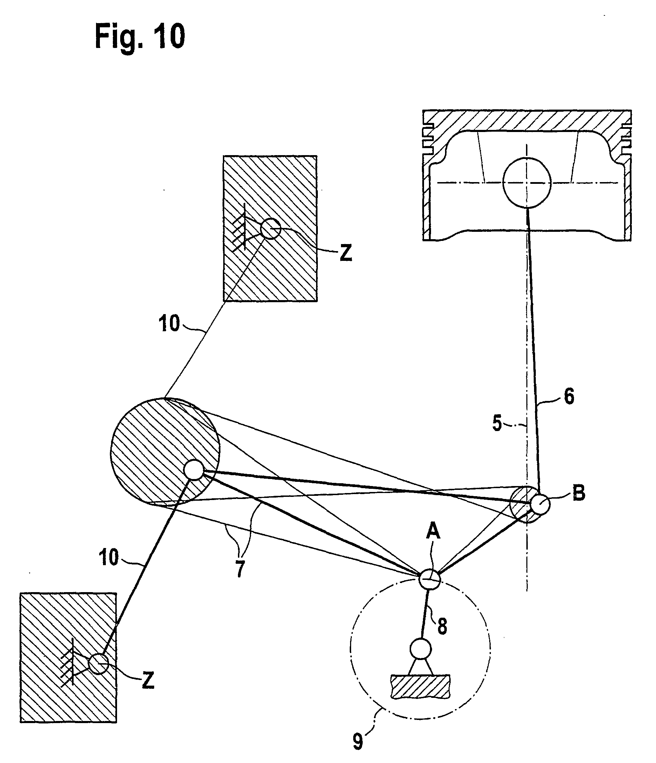

Fig. 10 zeigt eine weitere schematische Darstellung eines Kurbeltriebs einer Hubkolben-Brennkraftmaschine, in der die Positionen bestimmter Punkte im Kurbeltrieb eingetragen sind und in der mit schraffierten Feldern optimale Bereiche angegeben sind, in denen sich der Lagerpunkt B zwischen Querhebel 7 und Pleuel 6, der Lagerpunkt C zwischen Querhebel 7 und Steuerhebel 10 und der Anlenkpunkt Z des Steuerhebels 10 unter Berücksichtigung der vorgenannten optimalen Wertebereiche für die Längen und Positionen des Kurbeltriebs bewegen können. Für einen laufruhigen Betrieb der Brennkraftmaschine mit sehr geringen Belastungen auf einzelne Elemente des Kurbeltriebs sind gemäß der Erfindung bestimmte Größenverhältnisse der geometrischen Längen und Positionen der Bauteile des Kurbeltriebs erforderlich. In Abhängigkeit des Radius r, welcher die Länge der Kurbel 8 bezeichnet, sind die Proportionen des dreieckigen Querhebels 7 mit den Seitenlängen a, b, c wie folgt anzugeben, wobei a die Seitenlänge zwischen dem Pleuel-Lagerpunkt B und dem Steuerhebel-Lagerpunkt C, b die Seitenlänge zwischen dem Kurbel-Gelenk A und dem Steuerhebel-Lagerpunkt C und die Seitenlänge c den Abstand vom Kurbel-Gelenk A und Pleuel-Lagerpunkt B bezeichnet:

$$4.0 * r \leq a \leq 7.0 * r \,,$$

$$2.2 * r \leq b \leq 5.5 * r \,,$$

$$1.2 * r \leq c \leq 3.5 * r \,.$$

Die Länge 1 des Pleuels 6, die Länge k des Steuerhebels 10 und der Abstand e zwischen Drehachse der Kurbelwelle 9 und der Längsachse 5 des Zylinders 4 bemessen sich in bevorzugter Ausführung wie folgt:

$$3.8 * r \leq 1 \leq 5.2 * r \,,$$

$$2.8 * r \leq k \leq 6.2 * r \,,$$

$$1.1 * r \leq e \leq 2.6 * r \,.$$

Ein weiteres optimales Größenverhältnis kann für den in Fig. 9 gezeigten Fall gegeben werden, dass Pleuel 6 und Steuerhebel 10 auf der gleichen Seite des Querhebels 7 angeordnet sind. Der Abstand f zwischen Zylinderachse 5 und Anlenkpunkt Z des Steuerhebels 10 an seinem Stellelement sowie der Abstand p zwischen Kurbelwellenachse und Anlenkpunkt Z bemessen sich vorteilhaft wie folgt:

$$2.8 * r \leq f \leq 5.8 * r \,,$$

$$4.8 * r \leq p \leq 9.5 * r \,.$$

Für den Fall, dass Steuerhebel und Pleuel auf gegenüberliegenden Seiten des Querhebels angeordnet sind, können für den Abstand f zwischen Zylinderachse und Anlenkpunkt und den Abstand p zwischen Kurbelwellenachse und Anlenkpunkt folgende optimierte Größenangeben gemacht werden:

$$5.5 * r \leq f \leq 8.2 * r \, ,$$

$$-1.0 * r \leq p \leq 0.7 * r \, .$$

## Patentansprüche

1. Hubkolben-Brennkraftmaschine, mit einem in einem Zylinder verschieblich angeordneten Kolben (4), der mit einem Pleuel (6) gelenkig gekoppelt ist, dessen Bewegung auf eine Kurbel (8) einer Kurbelwelle (9) übertragbar ist, wobei zwischen dem . Pleuel (6) und der Kurbel (8) ein Übertragungsglied vorgesehen ist, dessen Bewegung über einen Steuerhebel (10) manipulierbar ist, mit dem Ziel, eine steuerbare Bewegung des Kolbens zu gewährleisten, insbesondere um eine Variierung des Verdichtungsverhältnisses und des Kolbenhubs zu ermöglichen, wobei das Übertragungsglied als Querhebel (7) ausgebildet ist, der über ein Gelenk (A) mit der Kurbel (8) gekoppelt ist, wobei dieses Gelenk (A) im zwischenliegenden Bereich zwischen einem Lagerpunkt (B, C) des Querhebels (7) zum Steuerhebel (10) und einem Lagerpunkt (B, C) des Querhebels (7) zum Pleuel (6) liegt, und wobei das Gelenk (A) zwischen Querhebel (7) und Kurbel (8) mit Abstand zur Verbindungslinie zwischen den beiden Lagerpunkten (B, C) des Querhebels (7) zum Steuerhebel (10) bzw. zum Pleuel (6) angeordnet ist, **dadurch gekennzeichnet,** **dass** die Seitenlänge (a) zwischen dem Steuerhebel-Lagerpunkt (B, C) und Pleuel-Lagerpunkt (B) und die Seitenlänge (b) zwischen dem Steuerhebel-Lagerpunkt (C) und dem Kurbel-Gelenkpunkt und die Seitenlänge (c) zwischen dem Pleuel-Lagerpunkt (B) und dem Kurbel-Gelenkpunkt sich - bezogen auf den Kurbelradius (r) - wie folgt bemessen sind:

$$4.0 * r \leq a \leq 7.0 * r \, ,$$

$$2.2 * r \leq b \leq 5.5 * r \, ,$$

$$1.2 * r \leq c \leq 3.5 * r \, .$$

2. Hubkolben-Brennkraftmaschine nach Anspruch 1, **dadurch gekennzeichnet,** **dass** der Querhebel (7) als Dreieckshebel ausgebildet ist, in dessen Dreieckspunkten die Lagerpunkte (B, C) bzw. Gelenke (A) angeordnet sind.

3. Hubkolben-Brennkraftmaschine nach einem der Ansprüche 1 bis 2,

**dadurch gekennzeichnet,** **dass** die Länge (1) des Pleuels (6) und die Länge (k) des Steuerhebels (10) und der Abstand (e) zwischen Drehachse der Kurbelwelle (9) und der Längsachse des Zylinders (3) sich - bezogen auf den Kurbelradius (r) - wie folgt bemessen sind:

$$3.8 * r \leq 1 \leq 5.2 * r \, ,$$

$$2.8 * r \leq k \leq 5.2 * r \, ,$$

$$1.1 * r \leq e \leq 1.9 * r \, .$$

4. Hubkolben-Brennkraftmaschine nach einem der Ansprüche 1 bis 3, **dadurch gekennzeichnet,** **dass** für den Fall, dass der Steuerhebel (10) auf der gleichen Seite des Querhebels (7) angeordnet ist wie das Pleuel (6), der Abstand (f) zwischen der Längsachse des Zylinders (3) und einem Anlenkpunkt (Z) des Steuerhebels (10) zum Gehäuse der Brennkraftmaschine (1) und der Abstand (p) zwischen der Kurbelwellenachse und diesem Anlenkpunkt (Z) sich - bezogen auf den Kurbelradius (r) - wie folgt bemessen sind:

$$2.8 * r \leq f \leq 4.8 * r \, ,$$

$$4.8 * r \leq p \leq 7.2 * r \, .$$

5. Hubkolben-Brennkraftmaschine nach Anspruch 4, **dadurch gekennzeichnet,** **dass** für den Fall, dass der Steuerhebel (10) und das Pleuel (6) auf gegenüberliegenden Seiten des Querhebels (7) angeordnet sind wie das Pleuel (6), der Abstand (f) zwischen der Längsachse des Zylinders (3) und dem Anlenkpunkt (Z) und der Abstand (p) zwischen der Kurbelwellenachse und dem Anlenkpunkt (Z) sich - bezogen auf den Kurbelradius (r) - wie folgt bemessen sind:

$$5.5 * r \leq f \leq 8.2 * r \, ,$$

$$- 1.0 * r \leq p \leq 0.7 * r \, .$$

6. Hubkolben-Brennkraftmaschine nach einem der Ansprüche 1 bis 5, **dadurch gekennzeichnet,** **dass** ein Anlenkpunkt (Z) des Steuerhebels (10) auf einer Steuerbahn bewegbar ist.

**7.** Hubkolben-Brennkraftmaschine nach einem der Ansprüche 1 bis 6, **dadurch gekennzeichnet,** **dass** der Anlenkpunkt (Z) des Steuerhebels (10) über eine gelenkig gelagerte Zusatzkurbel verstellbar ist.

**8.** Hubkolben-Brennkraftmaschine nach einem der Ansprüche 1 bis 7, **dadurch gekennzeichnet,** **dass** der Anlenkpunkt (Z) des Steuerhebels (10) über einen Nocken verstellbar ist.

**9.** Hubkolben-Brennkraftmaschine nach einem der Ansprüche 1 bis 8, **dadurch gekennzeichnet,** **dass** der Anlenkpunkt (Z) des Steuerhebels (10) in einstellbaren Winkellagen festsetzbar ist.

**10.** Hubkolben-Brennkraftmaschine nach einem der Ansprüche 1 bis 9, **dadurch gekennzeichnet,** **dass** die Winkellage des Anlenkpunktes Z des Steuerhebels in Abhängigkeit motorischer Zustandsgrößen und Betriebsparameter einstellbar ist.

**11.** Hubkolben-Brennkraftmaschine nach einem der Ansprüche 1 bis 10, **dadurch gekennzeichnet,** **dass** der Anlenkpunkt (Z) des Steuerhebels (10) auf einer Steuerbahn mit Kurbelwelle synchronisiert bewegbar ist.

**12.** Hubkolben-Brennkraftmaschine nach einem der Ansprüche 1 bis 10, **dadurch gekennzeichnet,** **dass** der Anlenkpunkt (Z) des Steuerhebels (10) auf einer Steuerbahn mit Kurbelwelle synchronisiert bewegbar ist und die Phasen in Abhängigkeit motorischer Zustandsgrößen und Betriebsparameter verstellbar sind.

**13.** Hubkolben-Brennkraftmaschine nach einem der Ansprüche 1 bis 12, **dadurch gekennzeichnet ,** **dass** der Anlenkpunkt (Z) des Steuerhebels (10) auf einer Steuerbahn mit Kurbelwelle synchronisiert bewegbar ist, wobei die Übersetzungszahl änderbar ist.

**Claims**

**1.** Lifting-cylinder internal combustion engine with a piston (4) which can be displaced in a cylinder and which is coupled to a piston rod (6), the movement of which can be transmitted to a crankshaft (9), whereby a transmission member is provided between the piston rod (6) and the crank (8), the movement of the said transmission member being manipulable by a control lever (10) for the purpose of ensuring controllable movement of the piston, particularly to enable variation of the compression ratio and the piston stroke, whereby the transmission member is developed as a transverse lever (7) that is connected to the crank (7) by means of a link (A), whereby this link (A) lies in an area between a point of support (B, C) of the transverse lever (7) to the control lever and a point of support (B, C) of the transverse lever (7) to the piston rod (6), and whereby the link (A) is disposed between the transverse lever (7) and the crank (8) at a separation from a line connecting the two support points (B, C) of the transverse lever (7) of the control lever (10) and the piston rod (6), **characterized in that** the lateral length (a) between the control lever support point (B, C) and the piston rod support point (B) and the lateral length (b) between the control lever support point (C) and the crank joint and the lateral length (c) between the piston rod support point (B) and the crank joint are, in relation to the crank radius (r), as follows:

$$4.0 * r \leq a \leq 7.0 * r ,$$

$$2.2 * r \leq b \leq 5.5 * r ,$$

$$1.2 * r \leq c \leq 3.5 * r .$$

**2.** Lifting-cylinder internal combustion engine in accordance with claim 1, **characterized in that** the transverse lever (7) is developed as a triangular lever, in the triangular points of which the points of support (B, C) and the link (A) are disposed.

**3.** Lifting-cylinder internal combustion engine in accordance with one of claims 1 and 2, **characterized in that** the length (1) of the piston rod (6) and the length (k) of the control lever (10) and the gap (e) between the rotation axis of the crankshaft (9) and the longitudinal axis of the cylinder (3) are, in relation to the crank radius (r), as follows:

$$3.8 * r \leq 1 \leq 5.2 * r ,$$

$$2.8 * r \leq k \leq 5.2 * r ,$$

$$1.1 * r \leq e \leq 1.9 * r \,.$$

**4.** Lifting-cylinder internal combustion engine in accordance with one of claims 1 to 3,
**characterized in that**
in the case where the control lever (10) is disposed on the same side of the transverse lever (7) as the piston rod (6), the separation (f) between the longitudinal axis of the cylinder (3) and a pivotal point (Z) are, in relation to the crank radius, as follows:

$$2.8 * r \leq f \leq 4.8 * r \,,$$

$$4.8 * r \leq p \leq 7.2 * r \,.$$

**5.** Lifting-cylinder internal combustion engine in accordance with claim 4,
**characterized in that**
in the case where the control lever (10) and the piston rod (6) are disposed on opposite sides of the transverse lever (7), the separation (f) between the longitudinal axis of the cylinders (3) and the pivotal point (Z) and the separation (p) between the crankshaft axis and the pivotal point (Z) are, in relation to the crank radius (r), as follows:

$$5.5 * r \leq f \leq 8.2 * r \,,$$

$$-1.0 * r \leq p \leq 0.7 * r \,.$$

**6.** Lifting-cylinder internal combustion engine in accordance with one of claims 1 to 5,
**characterized in that**
a pivotal point (Z) of the control lever (10) can move over a control path.

**7.** Lifting-cylinder internal combustion engine in accordance with one of claims 1 to 6,
**characterized in that**
that the pivotal point (Z) of the control lever (10) can be displaced by means of a link-born, auxiliary crank.

**8.** Lifting-cylinder internal combustion engine in accordance with one of claims 1 to 7,
**characterized in that**
that the pivotal point (Z) of the control lever (10) can be displaced by means of a cam.

**9.** Lifting-cylinder internal combustion engine in accordance with one of claims 1 to 8,
**characterized in that**
that the pivotal point (Z) of the control lever (10) can be fixed in settable angular positions.

**10.** Lifting-cylinder internal combustion engine in accordance with one of claims 1 to 9,
**characterized in that**
the angular position of the pivotal point Z of the control lever can be adjusted on the basis of variables of state and operational parameters relating to the given engine.

**11.** Lifting-cylinder internal combustion engine in accordance with one of claims 1 to 10,
**characterized in that**
that pivotal point (Z) of the control lever (10) can move, synchronized with the crankshaft, on a control path.

**12.** Lifting-cylinder internal combustion engine in accordance with one of claims 1 to 10,
**characterized in that**
the pivotal point (Z) of the control lever (10) can move, synchronized with the crankshaft, on a control path, and the stages of this movement can be adjusted on the basis of variables of state and operational parameters of the given engine.

**13.** Lifting-cylinder internal combustion engine in accordance with one of claims 1 to 12,
**characterized in that**
the pivotal point (Z) of the control lever (10) can move, synchronized with the crankshaft, on a control path, whereby the transmission ratio is variable.

**Revendications**

**1.** Moteur à combustion interne à piston alternatif comportant un piston (4) disposé de manière à être déplaçable dans un cylindre et qui est couplé d'une manière articulée à une bielle (6), dont le déplacement est transmissible à une manivelle (8) d'un vilebrequin (9), et dans lequel entre la bielle (6) et la manivelle (8) il est prévu un organe de transmission, dont le déplacement peut être manipulé au moyen d'un levier de commande (10), avec comme objectif de garantir un déplacement commandable du piston, notamment permettre une modification du taux de compression et de la course du piston, l'organe de transmission est agencé sous la forme d'un levier transversal (7), qui peut être couplé à la manivelle (8) par l'intermédiaire d'une articulation (A), cette articulation (A) est située dans la zone intercalaire entre un point (B, C) de support du levier transversal (7) sur le levier de commande (10) et un point (B, C) de support du levier transversal (7) sur la bielle (6), et l'articulation (A) entre le levier transversal (7) et la manivelle (8) est disposée à distance de la droite reliant les deux points (B, C) de support du levier transversal (7) sur le levier de commande (10) et la bielle (6),

**caractérisé en ce que**

la longueur latérale (a) entre le point de palier (B, C) du levier de commande et le point de palier (B) de la bielle et la longueur latérale (b) entre le point de support (C) du levier de commande et le point d'articulation de manivelle et la longueur latérale (c) entre le point de support (B) de la bielle et le point d'articulation de la manivelle sont dimensionnées - d'une manière rapportée au rayon (r) de manivelle - comme suit:

$$4,0 * r \leq a \leq 7,0 * r,$$

$$2,2 * r \leq b \leq 5,5 * r'$$

$$1,2 * r \leq c \leq 3,5 * r.$$

2. Moteur à combustion interne à piston alternatif selon la revendication 1, **caractérisé en ce que** le levier transversal (7) est agencé sous la forme d'un levier triangulaire, aux sommets duquel sont disposés les points de support (B, C) ainsi que l'articulation (A).

3. Moteur à combustion interne à piston alternatif selon l'une des revendications 1 et 2, **caractérisé en ce que** la longueur (1) de la bielle (6) et la longueur (k) du levier de commande (10) et la distance (e) entre l'axe de rotation du vilebrequin (9) et l'axe longitudinal du cylindre (3) sont dimensionnées - d'une manière rapportée au rayon (r) de la manivelle - comme suit:

$$3,8 * r \leq 1 \leq 5,2 * r,$$

$$2,8 * r \leq k \leq 5,2 * r,$$

$$1,1 * r \leq e \leq 1,9 * r.$$

4. Moteur à combustion interne à piston alternatif selon l'une des revendications 1 à 3, **caractérisé en ce que** dans le cas où le piston de commande (10) est disposé sur le même côté du levier transversal (7) que la bielle (6), la distance (f) entre l'axe longitudinal du cylindre (3) et un point d'articulation (Z) du levier de commande (10) par rapport au boîtier du moteur à combustion interne (1) et la distance (p) entre l'axe du vilebrequin et ce point d'articulation (Z) sont dimensionnées - d'une manière rapportée au rayon (r) de la manivelle - comme suit:

$$2,8 * r \leq f \leq 4,8 * r,$$

$$4,8 * r \leq p \leq 7,2 * r.$$

5. Moteur à combustion interne à piston alternatif selon la revendication 4, **caractérisé en ce que** dans le cas où le levier de commande (10) et la bielle (6) sont disposés sur des côtés opposés du levier transversal (7) par rapport à la bielle (6), la distance (f) entre l'axe longitudinal du cylindre (3) et le point d'articulation (Z) et la distance (p) entre l'axe du vilebrequin et le point d'articulation (Z) sont dimensionnées - d'une manière rapportée au rayon (r) de la manivelle - comme suit:

$$5,5 * r \leq f \leq 8,2 * r,$$

$$-1,0 * r \leq p \leq 0,7 * r.$$

6. Moteur à combustion interne à piston alternatif selon l'une des revendications 1 à 5, **caractérisé en ce qu'**un point d'articulation (Z) du levier de commande (10) est déplaçable sur une piste de commande.

7. Moteur à combustion interne à piston alternatif selon l'une des revendications 1 à 6, **caractérisé en ce que** le point d'articulation (Z) du levier de commande (10) est réglable au moyen d'une manivelle supplémentaire montée de façon articulée.

8. Moteur à combustion interne à piston alternatif selon l'une des revendications 1 à 7, **caractérisé en ce que** le point d'articulation (Z) du levier de commande (10) est réglable au moyen d'une came.

9. Moteur à combustion interne à piston alternatif selon l'une des revendications 1 à 8, **caractérisé en ce que** le point d'articulation (Z) du levier de commande (10) peut être fixé dans des positions angulaires réglables.

10. Moteur à combustion interne à piston alternatif selon l'une des revendications 1 à 9, **caractérisé en ce que** la position angulaire du point d'articulation (Z) du levier de commande est réglable en fonction de grandeurs d'état et de paramètres de fonctionnement du moteur.

11. Moteur à combustion interne à piston alternatif selon l'une des revendications 1 à 10, **caractérisé en ce que** le point d'articulation (Z) du levier de commande (10) est déplaçable d'une manière synchronisée sur une piste de commande avec le vilebrequin.

**12.** Moteur à combustion interne à piston alternatif selon l'une des revendications 1 à 10, **caractérisé en ce que** le point d'articulation (Z) du levier de commande (10) est déplaçable sur une piste de commande d'une manière synchronisée avec le vilebrequin et que les phases sont réglables en fonction de grandeurs d'état et de paramètres de fonctionnement du moteur.

**13.** Moteur à combustion interne à piston alternatif selon l'une des revendications 1 à 12, **caractérisé en ce que** le point d'articulation (Z) du levier de commande (10) est déplaçable sur une piste de commande d'une manière synchronisée avec le vilebrequin, le rapport de démultiplication étant modifiable.

# Fig. 1

A

11

13

12

5

14

Z

15

# Fig. 2

5

12

14

Z

13

15

11

# Fig. 3

Fig. 4a

Fig. 4b

Fig. 4c

## Fig. 5a

$$Ne_1 < Ne_2$$
$$Vh_1 = Vh_2$$

## Fig. 5b

$$Ne_1 = Ne_2$$
$$Vh_2 = Vh_1$$
$$n_1 > n_2$$

## Fig. 5c

$$Ne_1 = Ne_2$$
$$Vh_2 < Vh_1$$

Fig. 6a

Fig. 6b

Fig. 7

16

# Fig. 8

## Fig. 9a

## Fig. 9b

# Fig. 10